# EUROPÄISCHE PATENTANMELDUNG

(11) **EP 0 638 403 A2**
(43) Veröffentlichungstag der Anmeldung: **15.02.1995**
(21) Anmeldenummer: 94108835.3
(22) Anmeldetag: 09.06.1994
(51) Int. Cl.: B29B 9/10, C08J 3/12, B05B 7/16

(54) **Verfahren zum Herstellen von Teilchen aus Kunststoffen**

(30) Priorität: 17.06.1993 DE 4319990
(71) Anmelder: MESSER GRIESHEIM GMBH, D-60547 Frankfurt (DE)
(72) Erfinder: Gross, Gerhard, Dr., D-47877 Willich (DE); Meier, Birgitta, D-47447 Moers (DE); Vetter, Johannes, Dr., D-01157 Dresden (DE); Steinau, Peter, Dr., D-55122 Mainz (DE)

(57) **Zusammenfassung**

Die Erfindung betrifft ein Verfahren zum lösungsmittelfreien und trockenem Herstellen von Teilchen aus Kunststoffen. Gemäß der Erfindung wird der Kunststoff zu einer viskosen Masse erwärmt, so als Massenstrom (16) durch einen Auslauf (13) in eine Zerstäubungsvorrichtung (11) gefördert und dort mit einem unter Druck stehenden gasförmigen und/oder flüssigen Verdüsungsmedium angespritzt in Fibride und/oder feine Partikel zerteilt.

## Beschreibung

Die Erfindung betrifft ein Verfahren zum Herstellen von Teilchen aus Kunststoffen nach dem Oberbegriff des Anspruches 1.

Eine Vielzahl von Anwendungen setzt Kunststoffteilchen in Form von Fasern (Fibriden) oder rieselfähigen Partikeln (Pulvern) ein, so z.B. Fibride bei der Herstellung von Spezialpapieren (Teebeuteln) oder als Asbestersatz bei Faserzement und Kunststoffpulver in Beschichtungen und Dispersionen.

Unter Fibriden versteht man künstlich hergestellte kurze, feine Kunststoffasern mit einer Länge zwischen 0,5 und 6 mm und einem Durchmesser von etwa 1 bis 10 µm.

Bekanntgeworden ist eine Herstellung von Fibriden, bei der der Kunststoff in alkoholischer Lösung mit Wasser emulgiert und unter hohem Druck in eine evakuierte Kammer gespritzt wird. Hierdurch verdampft der Alkohol schlagartig und reißt den Flüssigkeitsstrahl auseinander, wobei kurze Fasern entstehen, die anschließend durch Trocknung von dem sie umgebenden Wasser getrennt werden.

Wünschenswert ist jedoch ein lösungsmittelfreies und trockenes Herstellungs verfahren von Kunststoffteilchen, weil hierdurch der Herstellungsaufwand wesentlich reduziert werden kann.

Aufgabe der Erfindung ist es daher, ein Verfahren und eine Vorrichtung zum Herstellen von Kunststoffteilchen zu schaffen, welches gegenüber dem bekannten Verfahren wirtschaftlicher ist und dessen Nachteile verringert oder ganz beseitigt.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen sind in den Unteransprüchen angegeben.

Die Erfindung geht von dem Gedanken aus, Kunststoffe zu einer viskosen Masse zu erwärmen und mit einem unter Druck auftreffenden Verdüsungsmedium zu zerteilen. Überraschenderweise hat sich gezeigt, daß bei entsprechender, von dem verwendeten Kunststoff und dem Verdüsungsmedium abhängiger kinetischer Auftreffenergie des Verdüsungsmediums auf der viskosen Masse des Kunststoffes Fibride und feine Partikel entstehen. Dabei hat sich ein Anspritzen der viskosen Masse mittels tiefkalt verflüssigtem Gas, insbesondere tiefkalt verflüssigtem Stickstoff, als besonders vorteilhaft erwiesen, weil die Auftreffenergie auf die viskose Masse des Kunststoffes infolge der höheren Dichte weiter gesteigert werden kann, so daß durch den hohen Impuls des Stickstoffsflüssig und die Expansion des verdampfenden Stickstoffs-flüssig der viskose Massenstrom des Kunststoffes in kleine Teilchen zerrissen wird. Hinzu kommt, daß der Kunststoff im schmelzflüssigen Zustand durch den tiefkalt verflüssigten Stickstoff vor einer Berührung mit Sauerstoff und damit vor einer Oxidation geschützt wird und durch die tiefen Temperaturen des flüssigen Stickstoffs die erzeugten Partikel bzw. Fibride sofort erstarren und nicht wieder miteinander verkleben.

Der verdampfende Stickstoff wird anschließend von mitgerissenen Kunststoffteilchen gereinigt und ins Freie geleitet bzw. zur weiteren Verwendung einem Sammelbehälter zugeführt.

Eine Verdüsung des Kunststoffs im schmelzflüssigen Zustand mit Gasen wie Luft, Stickstoff oder Argon oder auch mit Wasser führen zu größeren Längen und Durchmessern der Fibride bzw. Partikel.

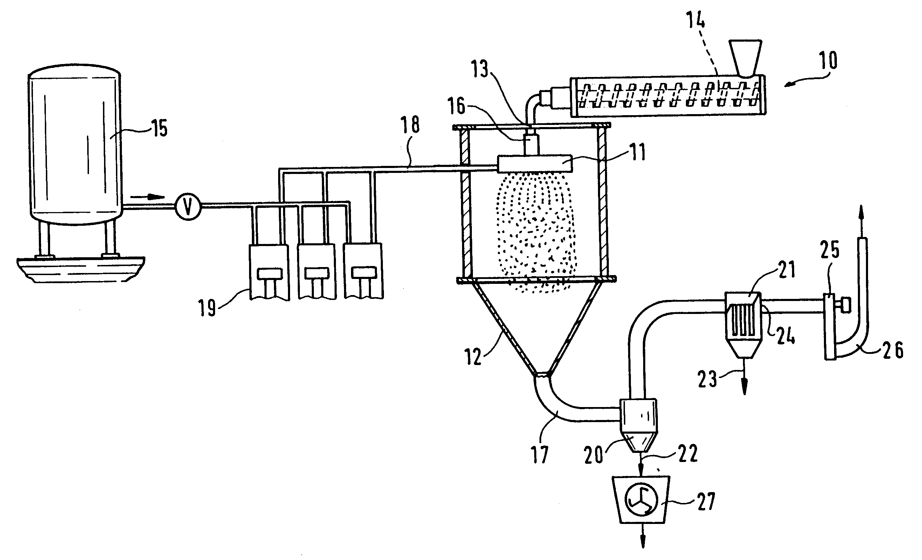

In der Zeichnung ist eine Schmelzvorrichtung mit 10, eine Zerstäubungsvorrichtung mit 11 sowie ein der Zerstäubungsvorrichtung 11 und der Schmelzvorrichtung 10 zugeordneter Verdüsungsturm mit 12 gekennzeichnet.

In der Schmelzvorrichtung 10 wird ein Kunststoff bis auf eine Temperatur, die zur Einstellung einer niedrigen Viskosität möglichst hoch, jedoch deutlich unterhalb der jeweiligen Zersetzungstemperatur liegen muß, zu einer viskosen Masse erwärmt (z. B. Low-Density-Polyethylene [LDPE] auf ca. 280 °C) und gelangt als viskoser Massenstrom mit Austrittsgeschwindigkeiten zwischen 20 und 200 g/s, vorzugsweise 50 bis 150 g/s durch einen Auslauf 13 mit einem gesamten freien Querschnitt zwischen 0,5 und 10 mm in den Verdüsungsturm 12. Der unvernetzte Kunststoff (Thermoplast), vorzugsweise aus der Gruppe der Polyolefinen (Polypropylen und Polyethylen) wird dabei bevorzugt in einem Extruder erschmolzen und mittels der Schnecke 14 zu dem Auslauf 13 gefördert. Es kommen prinzipiell zwei Arten von Extrudern für die Bereitstellung der Schmelze in Frage, ein kontinuierlich arbeitender Extruder (evtl. mit nachgeschalteter Spinnpumpe) mit einem über die Zeit konstanten Durchsatz, oder ein Extruder, der stoßweise eine deutlich größere Menge in kürzerer Zeit abgeben kann. Der Druck mit dem der Kunststoff aus dem Auslauf 13 ausgespritzt wird, wird dabei entweder mit der Schnecke 14 oder hydraulisch über einen Stempel oder pneumatisch mittels eines Gaspolsters auf die viskose Masse des Kunststoffs aufgebracht. Der Auslauf 13 kann sowohl aus einer einzelnen runden oder anders geformten (z.B. Spalt) Öffnung bestehen oder aus einer Anordnung von mehreren Öffnungen. Durch den gesamten Querschnitt des Auslaufs 13 und durch den hier anstehenden Druck wird die Geschwindigkeit festgelegt, mit der der Kunststoff in den Verdüsungsturm 12 eintritt. Eine Vordispergierung der viskosen Masse des Kunststoffs wird durch die Beigabe von gasförmigen, chemischen oder niedrigsiedenden flüssigen Treibmitteln (Schäummitteln) oder anderen Additiven sowie durch die Vermischung unverträglicher d.h. sich gegenseitig nicht benetzender Kunststoffe, in verschiedenen Mengenverhältnissen und Mischungen in der Schmelzvorrichtung 10 erreicht, so daß der aus dem Auslauf 13 austretende viskose Massenstrom bereits in Form kleiner bzw. kleinster Tröpfchen in den Bereich der Zerstäubungsvorrichtung 11 gelangt. Diese weist eine Ringspaltdüse, Ringlochdüse und/oder mehrere konzentrisch angeordnete Einzeldüsen mit fest vorgegebenem, jedoch variabel einstellbarem Anstellwinkel auf und/oder auf unterschiedlichen Ebenen angeordnete Mehrstufen-Düsen.

Durch Verändern der Düsenparameter wie Anstellwinkel, Austrittsquerschnitt und Düsendurchmesser als auch des Druckbereiches und des Verhältnisses Flüssiggasmenge/Kunststoffmenge kann sowohl die Fibriden/Partikelform (rund bis länglich) als auch die Korngrößenverteilung gezielt eingestellt werden. Die Düsenparameter werden an die Verdüsungsmedien Gas bzw. tiefkalt verflüssigtes Gas bzw. Flüssigkeit und an den eingesetzten Kunststoff unter Berücksichtigung der gewünschten Abmessungen der Fibride bzw. Partikel angepaßt. Bei Verwendung einer Ringspaltdüse kann das tiefkalt verflüssigte Gas ohne oder mit Drall austreten, wodurch eine Verbesserung der Zerstäubung erreicht wird.

Die Zerstäubungseinrichtung 11 ist über die isolierte Rohrleitung 18 gegebenenfalls unter Zwischenschaltung von einem mit flüssigem Stickstoff betriebenen Unterkühler und einer Pumpe 19 direkt mit einem isolierten Speicherbehälter 15 verbunden. Aus diesem wird das tiefsiedende verflüssigte Gas der Zerstäubungseinrichtung 11 zugeführt und tiefkalt verflüssigtes inertes Gas z.B. Stickstoff, Argon oder Helium mit einem Druck zwischen 5 und 600 bar, vorzugsweise zwischen 50 und 300 bar, gegen den viskosen Massenstrom 16 gespritzt.

Durch den Einsatz eines tiefkalt verflüssigten inerten Gases wird eine Berührung des viskosen Massenstroms mit Sauerstoff vermieden und so der Kunststoff vor einer Oxidation geschützt. Durch die tiefen Temperaturen des tiefkalten verflüssigten inerten Gases erstarren die Partikel bzw. Fibride sofort und fallen zum Boden des Verdüsungsturms 12. An den Verdüsungsturm ist über eine Leitung 17 ein Zyklon 20 und ein Filter 21 angeschlossen.

Dem Zyklon 20 und dem Filter 21 wird über Leitungen 22 bzw. 23 die Kunststoff-Partikel bzw. Kunststoff-Fibride entnommen.

Der Ausgang 24 des Filters 21 steht unter Zwischenschaltung eines Sauggebläses 25 mit einem Abluftkamin 26 in Verbindung.

Vorteilhaft werden bestimmte Kunststofftypen unmittelbar nach dem Verdüsen in Schneidmühlen 27 mechanisch nachzerkleinert. Der hierbei aufzubringende Energieaufwand ist klein, da das Material nach einer Verdüsung mit flüssigem Stickstoff tiefkalt und damit spröde ist und bereits in Form von dünnen Fasern vorliegt.

Versuche mit einem Polyethylen mit niedrigem spezifischen Gewicht (Low-Density-Polyethylene) ergaben Fibride mit einem mittleren Durchmesser von ca. 9 µm und einer Länge von einigen mm. Der Auslauf 13 der Schmelzvorrichtung 10 war kreisförmig mit einem Durchmesser von 4 mm. Die viskose Masse des Kunststoffs wurde pneumatisch mittels eines Stickstoff (N₂)-Gaspolsters durch einen Druck von 3 bar absolut in den Verdüsungsraum gefördert. Die Verdüsung wurde mit tiefkalt verflüssigtem Stickstoff durchgeführt, der mit einem Druck von 200 bar aus einem System von sechs Einzeldüsen austrat.

Versuche mit einem Polypropylen ergaben dünnere, aber etwas längere Fasern.

## Patentansprüche

1. Verfahren zum Herstellen von Teilchen aus Kunststoffen,
dadurch gekennzeichnet, daß
der Kunststoff zu einer viskosen Masse erwärmt, so als Massenstrom (16) durch einen Auslauf (13) in eine Zerstäubungsvorrichtung (11) gefördert wird und dort mit einem unter Druck stehenden gasförmigen und/oder flüssigen Verdüsungsmedium angespritzt in Fibride und/oder feine Partikel zerteilt wird.

2. Verfahren nach Anspruch 1,
dadurch gekennzeichnet, daß
das Verdüsungsmedium ein tiefkalt verflüssigtes Gas, vorzugsweise ein tiefkalt verflüssigtes inertes Gas, ist.

3. Verfahren nach Anspruch 1 oder 2,
dadurch gekennzeichnet, daß
der viskose Massenstrom mit einem Druck zwischen 5 und 600 bar, vorzugsweise mit einem Druck zwischen 50 und 300 bar, von dem Verdüsungsmedium beaufschlagt wird.

4. Verfahren nach einem der Ansprüche 1 bis 3,
dadurch gekennzeichnet, daß
das Verdüsungsmedium tiefkalt verflüssigter Stickstoff ist, der auf einen Druck zwischen 10 und 300 bar gebracht, durch eine Düse oder ein Düsensystem auf den viskosen Massenstrom (16) gespritzt wird.

5. Verfahren nach einem der Ansprüche 1 bis 4,
dadurch gekennzeichnet, daß
der Kunststoff ein Thermoplast, vorzugsweise aus der Gruppe der Polyolefinen, ist.

6. Verfahren nach einem der Ansprüche 1 bis 5,
dadurch gekennzeichnet, daß
der viskose Massenstrom auf Werte zwischen 20 und 200 g/s, vorzugsweise auf Werte zwischen 50 und 150 g/s gebracht, durch den Auslauf (13) austritt und in Teilchen verspritzt.

7. Verfahren nach einem der Ansprüche 1 bis 6,
dadurch gekennzeichnet, daß
dem Massenstrom ein Treibmittel (Schäummittel) zugesetzt wird.

8. Verfahren nach einem der Ansprüche 1 bis 7,
dadurch gekennzeichnet, daß
der Massenstrom ein unverträglicher Kunststoff zugesetzt wird.

9. Verfahren nach einem der Ansprüche 1 bis 8,
dadurch gekennzeichnet, daß
die Partikel und/oder Fibride in einer Schneidmühle nachzerkleinert werden.

10. Vorrichtung zur Herstellung von Teilchen aus Kunststoff,
gekennzeichnet durch eine Schmelz- und Fördervorrichtung (10), eine Zerstäubungsvorrichtung (11), einem der Zerstäubungsvorrichtung (11) und der Schmelz- und Fördervorrichtung (10) zugeordneten Verdüsungsturm (12) und einem an die Zerstäubungsvorrichtung (11) angeschlossen Versorgungseinrichtung (15) für das Verdüsungsmedium.

11. Vorrichtung nach Anspruch 10,
dadurch gekennzeichnet, daß
die Versorgungseinrichtung ein isolierter Speicherbehälter (15) für tiefkalt verlüssigtes Gas, vorzugsweise Stickstoff ist, der über eine isolierte Leitung gegebenenfalls unter Zwischenschaltung einer Pumpe (19) an ein oder mehrere auf den aus der Schmelz- und Fördervorrichtung (10) ausfließenden Massenstrom (16) gerichtete Düsen der Zerstäubungsvorrichtung (11) angeschlossen sind.

12. Vorrichtung nach einem der Ansprüche 10 oder 11,
dadurch gekennzeichnet, daß
an den Verdüsungsturm (12) über eine Leitung (17) ein Zyklon (20) und ein Filter (21) angeschlossen sind.

13. Vorrichtung nach Anspruch 12,
dadurch gekennzeichnet, daß
der Filterausgang (24) unter Zwischenschaltung eines Sauggebläses (25) mit einem Abluftkamin (26) in Verbindung steht.

14. Vorrichtung nach einem der Ansprüche 10 bis 13,
dadurch gekennzeichnet, daß
der Zyklon über Leitung 22 mit der Schneidmühle 27 zur Nachzerkleinerung verbunden ist.
